(19) Europäisches Patentamt
European Patent Office
Office européen des brevets

(11) EP 4 789 824 A1

(12) **EUROPEAN PATENT APPLICATION**
published in accordance with Art. 153(4) EPC

(43) Date of publication:
**12.08.2026 Bulletin 2026/33**

(21) Application number: **24874654.7**

(22) Date of filing: **02.10.2024**

(51) International Patent Classification (IPC):
***B25J 13/00*** *(2006.01)*

(52) Cooperative Patent Classification (CPC):
**B25J 13/00**

(86) International application number:
**PCT/JP2024/035324**

(87) International publication number:
**WO 2025/075054 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.10.2023 JP 2023172330**

(71) Applicants:
- **OMRON Corporation**
  **Kyoto-shi, Kyoto 600-8530 (JP)**
- **National University Corporation Nara Institute of Science and Technology**
  **Ikoma-shi, Nara 630-0192 (JP)**

(72) Inventors:
- **HISAKI, Yukinari**
  **Tokyo 113-0033 (JP)**
- **HAMAYA, Masashi**
  **Tokyo 113-0033 (JP)**
- **TANAKA, Kazutoshi**
  **Tokyo 113-0033 (JP)**
- **MATSUBARA, Takamitsu**
  **Ikoma-shi, Nara 630-0192 (JP)**

(74) Representative: **SONN Patentanwälte GmbH & Co KG**
**Riemergasse 14**
**1010 Wien (AT)**

# (54) CONTROL APPARATUS, CONTROL METHOD, AND CONTROL PROGRAM

(57) A control apparatus acquires position data of a control target portion provided to a robot. The control apparatus controls the control target portion so as to be in a first mode, in which a degree of softness of the control target portion is a prescribed value or greater, in cases in which the control target portion has not visited a position expressed by the position data in the past, or in cases in which a degree of contact of the control target portion with an obstacle at the position data is a prescribed degree or greater. Moreover, the control apparatus controls the control target portion so as to be in a second mode, in which a degree of rigidity of the control target portion is a prescribed value or greater, in cases in which the control target portion has visited the position expressed by the position data in the past and also in cases in which a degree of contact of the control target portion with an obstacle at the position data is less than the prescribed degree.

FIG.1

10
12
14
CONTROL APPARATUS
16
T
H

EP 4 789 824 A1

## Description

### Technical Field

The present disclosure relates to a control apparatus, control method, and control program.

### Background Art

In a known robot system, a wrist section of a robot is soft (see, for example, Cited Document 1: Hamaya, M., Lee, R., Tanaka, K., von Drigalski, F., Nakashima, C., Shibata, Y., & Ijiri, Y. (2020, May). "Learning robotic assembly tasks with lower dimensional systems by leveraging physical softness and environmental constraints." In 2020 IEEE International Conference on Robotics and Automation (ICRA) (pp. 7747-7753). IEEE.).

### SUMMARY OF INVENTION

### Technical Problem

However, sometimes a robot must execute a task in circumstances in which the robot is unable to acquire information related to the environment in advance. For example, when a robot is executing a task, such as a peg-in-hole task in which the robot grips a peg and inserts the peg into a hole, sometimes an obstacle is present on the path from the current position of a robot gripper to the position of the hole. In such circumstances, there is a possibility that the robot gripper may contact the obstacle when the robot has been unable to acquire information related to the position of obstacles in advance. In such circumstances, preferably a gripper part of the robot is soft. The shock is large when the gripper contacts an obstacle if the gripper part is rigid, with this leading to the possibility of damage occurring due to the shock. However, in cases in which the gripper part of the robot is soft over the whole process of a peg-in-hole task, then situations might arise in which shaking occurs when the gripper is being moved, or it is difficult to move the gripper accurately to the desired position.

Although the technology disclosed in the Cited Document 1 is technology related to a robot system having softness, no consideration has been given to what kind of action the robot should be made to perform in cases in which the robot has not been able to acquire in advance information related to the position of obstacles.

In consideration of the above circumstances, an object of the present disclosure is to enable a robot to execute a task while suppressing contact with an obstacle when the robot is in a rigid state for cases in which the robot is not able to acquire information related to the environment in advance.

### Solution to Problem

In order to achieve the above object, a control apparatus of the present disclosure is a control apparatus including an acquisition unit configured to acquire position data of a control target portion provided to a robot, and a control unit configured to control the control target portion so as to be in a first mode in which a degree of softness of the control target portion is a prescribed value or greater in cases in which the control target portion has not visited a position expressed by the position data in the past or in cases in which a degree of contact of the control target portion with an obstacle in the position data is a prescribed degree or greater, and control the control target portion so as to be in a second mode in which a degree of rigidity of the control target portion is a prescribed value or greater in cases in which the control target portion has visited the position expressed by the position data in the past and also in cases in which a degree of contact of the control target portion with an obstacle in the position data is less than the prescribed degree.

Moreover, a control method of the present disclosure is a control method for execution by a computer. The control method includes processing of acquiring position data of a control target portion provided to a robot, controlling the control target portion so as to be in a first mode in which a degree of softness of the control target portion is a prescribed value or greater in cases in which the control target portion has not visited a position expressed by the position data in the past or in cases in which a degree of contact of the control target portion with an obstacle in the position data is a prescribed degree or greater, and controlling the control target portion so as to be in a second mode in which a degree of rigidity of the control target portion is a prescribed value or greater in cases in which the control target portion has visited the position expressed by the position data in the past and also in cases in which a degree of contact of the control target portion with an obstacle in the position data is less than the prescribed degree.

Moreover, a control program of the present disclosure is a control program to cause a computer to execute processing including acquiring position data of a control target portion provided to a robot, controlling the control target portion so as to be in a first mode in which a degree of softness of the control target portion is a prescribed value or greater in cases in which the control target portion has not visited a position expressed by the position data in the past or in cases in

which a degree of contact of the control target portion with an obstacle in the position data is a prescribed degree or greater, and controlling the control target portion so as to be in a second mode in which a degree of rigidity of the control target portion is a prescribed value or greater in cases in which the control target portion has visited the position expressed by the position data in the past and also in cases in which a degree of contact of the control target portion with an obstacle in the position data is less than the prescribed degree.

Advantageous Effects

The control apparatus, the control method, and the control program of the present disclosure enable a task to be executed in cases in which information relating to the environment of a robot is unable to be acquired in advance, while suppressing the robot from contacting obstacles when in a rigid state.

BRIEF DESCRIPTION OF DRAWINGS

Fig. 1 is a diagram to explain a control system of an exemplary embodiment.
Fig. 2 is a diagram illustrating an example of a control target portion of an exemplary embodiment.
Fig. 3 is a diagram to explain actions of a control target portion of an exemplary embodiment.
Fig. 4 is a diagram to explain control of a control target portion.
Fig. 5 is a diagram to explain control of a control target portion.
Fig. 6 is a diagram to explain a Probabilistic Ensemble Model.
Fig. 7 is a block diagram representing a schematic configuration of a control system of an exemplary embodiment.
Fig. 8 is a block diagram illustrating a hardware configuration of a control apparatus according to an exemplary embodiment.
Fig. 9 is a diagram to explain a dynamics model.
Fig. 10 is a flowchart illustrating a flow of control processing in an exemplary embodiment.
Fig. 11 is a flowchart illustrating a flow of control processing in an exemplary embodiment.

DESCRIPTION OF EMBODIMENTS

Description follows regarding an example of an exemplary embodiment of the present disclosure, with reference to the drawings. In the present exemplary embodiment, an example will be described of a control system installed with a control apparatus according to the present exemplary. Note that the same reference numerals will be appended across the drawings to the same or equivalent configuration elements and parts. Moreover, for clarity dimensions and proportions in the drawings are exaggerated, and sometimes differ from actual proportions.

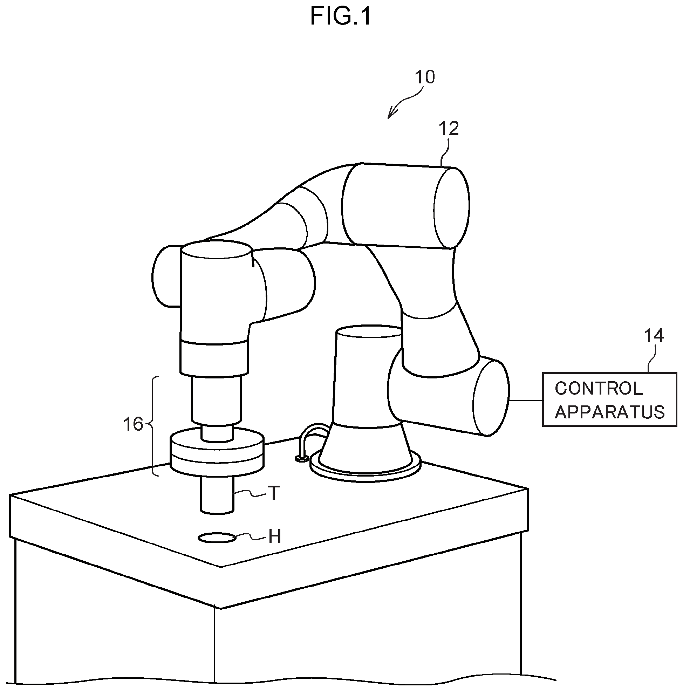

Fig. 1 is a diagram to explain a control system 10 of an exemplary embodiment. As illustrated in Fig. 1, the control system 10 includes a robot 12, a control apparatus 14, and a control target portion 16. A peg T is held by the control target portion 16. The control apparatus 14 executes a peg-in-hole task to insert the peg T into a hole H by controlling actions of the robot 12. Note that although not illustrated in Fig. 1, assume that an obstacle is present in the actual environment when the peg-in-hole task is being executed.

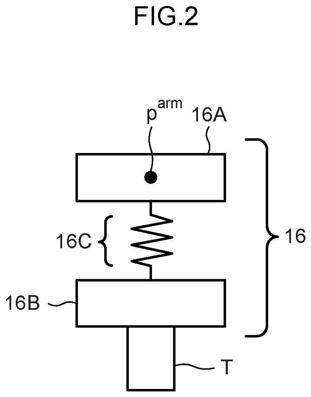

Fig. 2 is a diagram illustrating an example of the control target portion 16 of the present exemplary embodiment. As illustrated in Fig. 2, the control target portion 16 is configured by an arm 16A, a gripper 16B, and a spring 16C, serving as an example of an elastic body, connecting the arm 16A and the gripper 16B together. Note that in the present exemplary embodiment, in position data representing the position of the control target portion 16, the position $p^{arm}$ of the arm 16A of Fig. 2 is adopted as the position of the control target portion 16.

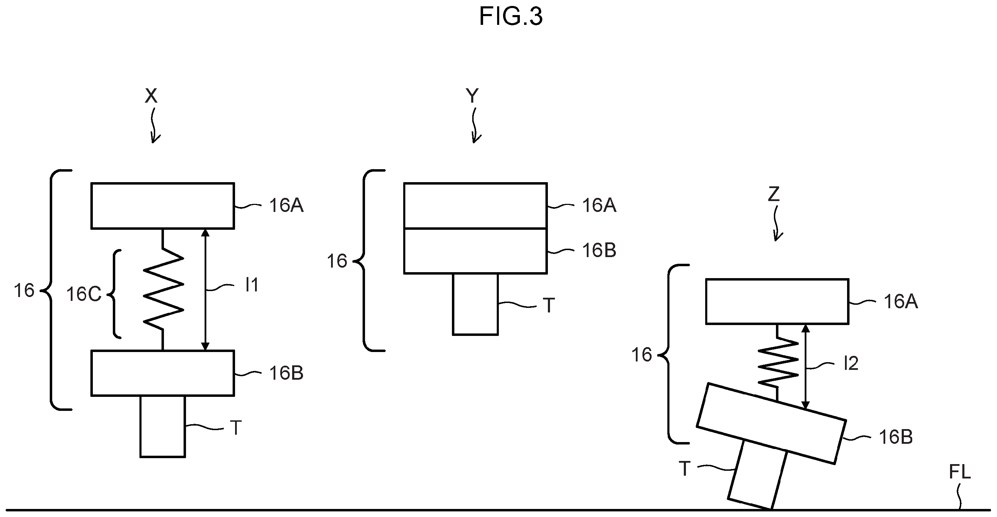

Fig. 3 is a diagram to explain actions of the control target portion 16 of the present exemplary embodiment. The state illustrated by X in Fig. 3 is a state in which the arm 16A and the gripper 16B of the control target portion 16 are connected together by the spring 16C, and the greater the degree of softness of the control target portion 16, the smaller the effect arising were the control target portion 16 to contact an obstacle. For example, as illustrated by Z in Fig. 3, in cases in which the control target portion 16 is in a first mode, because the control target portion 16 is in a soft state, shock is small even were the peg T to have contacted a floor surface FL serving as an example of an obstacle.

However, as illustrated by Y in Fig. 3, the control target portion 16 may be configured so as to enable control such that the arm 16A and the gripper 16B become a single body. For example, the state illustrated by Y in Fig. 3 can be realized based on a nonillustrated known mechanism. The state illustrated by Y in Fig. 3 is a state in which the arm 16A and the gripper 16B of the control target portion 16 are connected so as to become a single body, the degree of rigidity of the control target portion 16 becomes large, and there would be a large effect were the control target portion 16 to contact an obstacle.

In the present exemplary embodiment, the state of the control target portion 16 as illustrated by X in Fig. 3 is called

a first mode. In the present exemplary embodiment, the state of the control target portion 16 as illustrated by Y in Fig. 3 is called a second mode.

When actions of the robot 12 are being controlled when executing a task, the control apparatus 14 of the present exemplary embodiment moves the control target portion 16 of the robot 12 while switching between the first mode and the second mode. Specifically, the control apparatus 14 controls the control target portion 16 such that the control target portion 16 is in the first mode in positions in which there is a high possibility that the control target portion 16 will contact an obstacle. However, the control apparatus 14 controls the control target portion 16 such that the control target portion 16 is in the second mode in positions in which there is a low possibility that the control target portion 16 will contact an obstacle. Note that, as illustrated by X in Fig. 3, in cases in which the control target portion 16 does not contact an obstacle, a length l1 of the spring 16C is substantially the same as its natural length. In contrast thereto, as illustrated at Z in Fig. 3, in cases in which the control target portion 16 contacts an obstacle, a length l2 of the spring 16C is shorter that its natural length. In the present exemplary embodiment, switching between the first mode and the second mode is also controlled utilizing this principle.

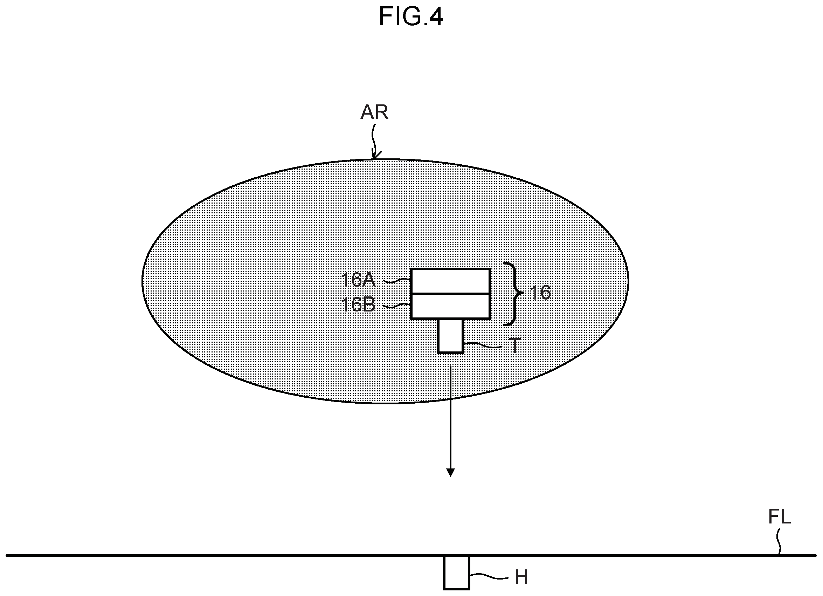

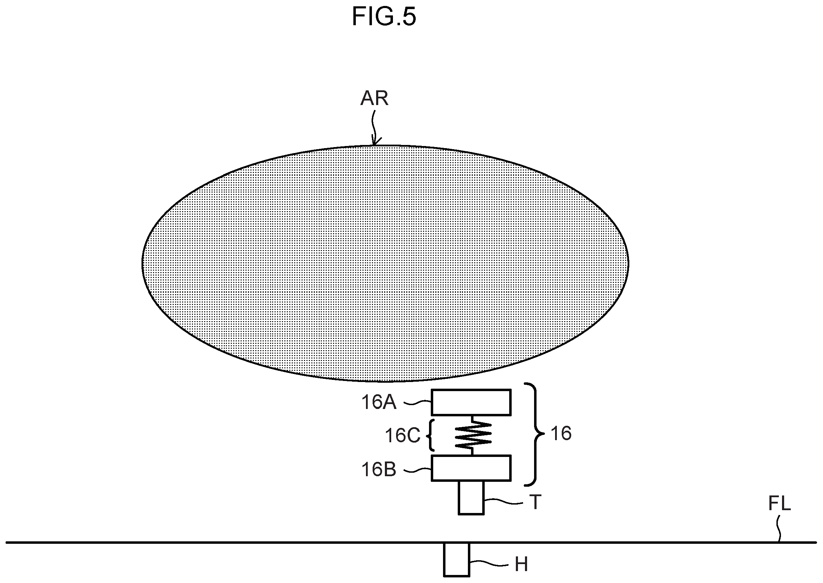

Fig. 4 and Fig. 5 are diagrams to explain control of the control target portion 16. AR in Fig. 4 and Fig. 5 indicates places where the control target portion 16 has visited in the past, and is an area representing places where there is a low possibility that the control target portion 16 will contact an obstacle.

As illustrated in Fig. 4, the control apparatus 14 controls the control target portion 16 so as to be in the second mode within the area AR. The control target portion 16 being in the second mode enables, for example, the control target portion 16 to be moved fast. However, as illustrated in Fig. 5, the control apparatus 14 controls the control target portion 16 so as to be in the first mode outside of the area AR.

This thereby enables, even in cases in which information relating to the environment of the robot 12 is unable to be acquired in advance, a peg-in-hole task to be executed while suppressing contact with an obstacle when the control target portion 16 provided to the robot 12 is in a rigid state. Specific explanation thereof follows.

In the present exemplary embodiment, a known Probabilistic Ensembles with Trajectory Sampling (PETS) algorithm is employed to control actions of the robot 12. The PETS algorithm is configured based on model-based reinforcement learning and a Probabilistic Ensemble Model (PE) and a Trajectory Sampling Strategy (TS∞). Note that the PETS algorithm is disclosed in the following reference document.

Reference Document: Chua, K., Calandra, R., McAllister, R., & Levine, S. (2018). "Deep reinforcement learning in a handful of trials using probabilistic dynamics models.", Advances in neural information processing systems, 31.

Probabilistic Ensemble Model

A known method of Probabilistic Ensemble Model (PE) is a model for predicting a next time state given a current state and a current behavior. For example, a Probabilistic Ensemble Model may be implemented by an ensemble of plural neural network models. In such cases, each of the plural neural network models is trained independently. Each of the plural neural network models is subjected to machine learning, which is training using combinations of behavior data $a_t$ and state data $s_t$ and state data $s_{t+1}$ obtained by the control target portion 16 of the robot 12 visiting various positions as training data.

Note that the Probabilistic Ensemble Model may also estimate a reward $r_{t+1}$ at time t + 1. In such cases, for example, when given behavior data $a_t$ and state data $s_t$, the Probabilistic Ensemble Model outputs a probability distribution related to combinations of state data $s_{t+1}$ and reward $r_{t+1}$. The probability distribution output from the Probabilistic Ensemble Model is expressed by the following Equation (1).

$$p(s_{t+1}, r_{t+1} | s_t, a_t) \quad (1)$$

Trajectory Sampling Strategy: TS∞

In a known method of a Trajectory Sampling Strategy, a trajectory of state data at each time is generated. Specifically, in a Trajectory Sampling Strategy, predicted values of state data s at respective times are obtained by the above Probabilistic Ensemble Model. Note that in the present exemplary embodiment, the state data $s_{t+1}$ at time t + 1 corresponds to the behavior data $a_t$ at time t. This is because transition to the state at time t + 1 depends on the behavior at time t.

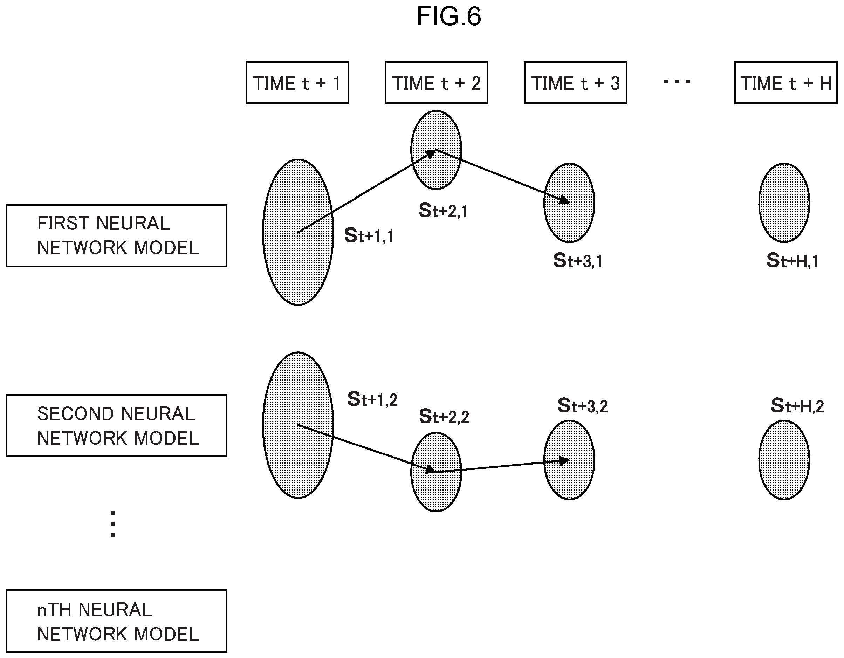

Fig. 6 is a diagram to explain Trajectory Sampling Strategy. The Probabilistic Ensemble Model of the present exemplary embodiment is configured by plural neural network models. For example, as illustrated in Fig. 6, the

Probabilistic Ensemble Model is configured by first to $n^{th}$ neural network models, these being n individual neural network models. In such cases, each of the n individual neural network models is subjected to training with the same training data even though initial values of weighting parameters are different. The respective prediction values output from each of the first to $n^{th}$ neural network models are accordingly slightly different. However, taking an ensemble of the first to $n^{th}$ neural network models (for example, a mean of prediction values) enables a prediction value with good accuracy to be obtained.

In the Trajectory Sampling Strategy, as illustrated in Fig. 6, a series of prediction values output from the respective first to $n^{th}$ neural network models is generated. Specifically, on inputting the behavior data $a_t$ at time t and the state data $s_t$ at time t to the first neural network model, a prediction value of state data $s_{t+1,\,1}$ at time t + 1 is output. Then, on inputting the prediction values of behavior data $a_{t+1}$ at time t + 1 and state data $s_{t+1,\,1}$ at time t + 1 to the first neural network model, a prediction value of state data $s_{t+2,\,1}$ at time t + 2 is output. On inputting the prediction values of behavior data $a_{t+2}$ at time t + 2 and state data $s_{t+2,\,1}$ at time t + 2 to the first neural network model, a prediction value of state data $s_{t+3,\,1}$ at time t + 3 is output. In this manner, prediction values are acquired for the state data s from time t + 1 to time t + H.

Moreover, similarly to the first neural network model, the second neural network model is employed to obtain prediction values of state data s at time t + 1 to time t + H.

In this manner, the predicted values of the state data s of time t + 1 to time t + H are output from each of the first to $n^{th}$ neural network models. A state data at respective times is estimated by ensemble of the trajectory prediction values output from the respective first to $n^{th}$ neural network models.

PETS Algorithm

The PETS algorithm is an algorithm based on the Probabilistic Ensemble Model and the Trajectory Sampling Strategy described above. The following processing (1) to (5) is executed in the PETS algorithm.

(1) The plural neural network models configuring the Probabilistic Ensemble Model are trained based on training data that is a combination of state data and behavior data.
(2) A series of prediction values of behavior data from the time t + 1 to time t + H is generated by the Trajectory Sampling Strategy.
(3) A series of behavior data is selected from the behavior data prediction value series from the time t + 1 to time t + H so as to maximize a total reward.
(4) The robot 12 is controlled so as to execute the selected behavior data series.
(5) The plural neural network models configuring the Probabilistic Ensemble Model are updated based on the new state data obtained by executing the behavior data series.

Proposal Method

In the present exemplary embodiment, the action of the robot 12 is controlled based on the PETS algorithm. Continuous state data $s^{conti} \in R^D$ is defined in the present exemplary embodiment. The continuous state data $s^{conti}$ is a state vector representing states of the robot 12 as expressed by continuous values. D indicates the vector dimensions. The continuous state data $s^{conti}$ is, for example, a state vector having velocity data of the arm 16A as elements. A length $l(s^{conti})$ of the spring 16C of the control target portion 16 and the position data $p^{arm}(s^{conti})$ of the arm 16A can be computed based on the continuous state data $s^{conti}$.

Moreover, the continuous behavior data $a^{conti} \in R^F$ is defined in the present exemplary embodiment. The continuous behavior data $a^{conti}$ is a state vector representing behavior of the robot 12 as expressed by continuous values. F indicates the vector dimensions. The velocity data of the control target portion 16 of the robot 12 is contained as a component in the continuous behavior data $a^{conti}$.

In the present exemplary embodiment, the mode of the control target portion 16 is switchable to the first mode or the second mode. Note that in the present exemplary embodiment, the Probabilistic Ensemble Model is prepared for each mode. A first model that is the Probabilistic Ensemble Model using the first mode is expressed by the following Equation (2). On the other hand, a second model that is the Probabilistic Ensemble Model using a second mode is expressed by the following Equation (3).

$$s_{t+1}^{\mathrm{conti}} \sim f_{\mathrm{soft}}\left(s_t^{\mathrm{conti}}, a_t^{\mathrm{conti}}\right) \tag{2}$$

$$s_{t+1}^{\mathrm{conti}} \sim f_{\mathrm{rigid}}\left(s_t^{\mathrm{conti}}, a_t^{\mathrm{conti}}\right) \tag{3}$$

The mode of the control target portion 16 is expressed by discrete value state data $s^{disc} \in \{0, 1\}$ representing discrete value states of the robot 12. 0 therein represents the first mode, and 1 therein represents the second mode. Discrete value behavior data $a^{conti} \in \{0, 1\}$ representing discrete value behavior of the robot 12 represents a behavior of mode switching. This means that the following Equation (4) is established. In the following Equation (4), a behavior at time t is expressed as a state at time t + 1.

$$s_{t+1}^{\mathrm{disc}} = a_t^{\mathrm{disc}} \tag{4}$$

In the present exemplary embodiment, a known model-based reinforcement learning is executed in order for the robot 12 to execute a peg-in-hole task. A reward function is accordingly designed in advance such that reward is maximized when a peg T has been inserted into a hole H, and a policy is trained so as to maximize the reward function. The PETS algorithm described above and known Model Predictive Control (MPC) are utilized in the present exemplary embodiment. However, the following two points need to be considered.

(1) Known model-based reinforcement learning is not able to dynamically handle a mix of discrete value inputs and continuous value inputs.
(2) The robot 12 may undertake a dangerous behavior in reinforcement learning, however such dangerous behavior needs to be stopped.

In order to accommodate the above first point, a PETS algorithm capable of handling discrete value inputs and continuous value inputs is proposed in the present exemplary embodiment. Moreover, in order to accommodate the above second point, a blocker is introduced in the present exemplary embodiment.

Hybrid PETS Algorithm

As described above, a conventional PETS algorithm is not able to simultaneously handle velocity data of the arm 16A input by continuous values, and switching between the first mode and the second mode input by discrete values. In the present exemplary embodiment, a PETS algorithm capable of handing a hybrid behavior according to continuous values and discrete values is accordingly proposed.

Firstly, a prediction horizon is denoted by H. Consider a case in which a discrete behavior data of series $a^{disc}_{t:t+H-1}$ representing switching instructions from time t to time t + H - 1 is fixed. A state of continuous values at time t' and dynamics related to behavior of continuous values is expressed by following Equation (5).

$$\begin{aligned} s_{t'+1}^{\mathrm{conti}} &\sim f_{t':a_{t:t+H-1}^{\mathrm{disc}}}\left(s_{t'}^{\mathrm{conti}}, a_{t'}^{\mathrm{conti}}; s_{t:t+H-1}^{\mathrm{disc}}, a_{t:t+H-1}^{\mathrm{disc}}\right) \\ &= \left(1 - s_{t'}^{\mathrm{disc}}\right) f_{\mathrm{soft}}\left(s_{t'}^{\mathrm{conti}}, a_{t'}^{\mathrm{conti}}\right) + s_{t'}^{\mathrm{disc}} f_{\mathrm{rigid}}\left(s_{t'}^{\mathrm{conti}}, a_{t'}^{\mathrm{conti}}\right) \end{aligned} \tag{5}$$

In Equation (5), $f_{soft}$ represents the first model that is a dynamics model using the first mode, and $f_{rigid}$ represents the second model that is a dynamics model using the second mode. Either the output of the first model or the output of the second model is employed according to whether a discrete state data $s^{disc}_{t'}$ is 0 or 1.

As described above, in cases in which a discrete behavior data series $a^{disc}_{t:t+H-1}$ is fixed, discrete state data series $s^{disc}_{t:t+H-1}$ is similarly determined. This means that in cases in which the discrete behavior data series $a^{disc}_{t:t+H-1}$ and the discrete state data series $s^{disc}_{t:t+H-1}$ are fixed, only the continuous behavior data $a^{conti}$ and the continuous state data $s^{conti}$, which are continuous values, need to be handled, enabling treatment with a framework similar to that of a

conventional PETS algorithm. This enables an optimal series of continuous behavior data $a^{conti}_{t:t+H-1}$ to be planned for all obtainable discrete behavior data series $a^{disc}_{t:t+H-1}$, and an optimal discrete behavior data series and continuous behavior data series can be obtained by selecting the best discrete behavior data series therefrom.

However, an enormous computation cost may be incurred in cases in which an optimal continuous behavior data series is computed for all obtainable discrete behavior data series.

Thus the present exemplary embodiment makes an assumption that mode switching will only occur once during execution of reinforcement learning, and sets a discrete behavior data series accordingly. Specifically, as illustrated in following Equation (6), a discrete behavior data series is set fixed. In following Equation (6), an example is given of a discrete behavior data series $A^d_t$ of a search target. Moreover, as indicated in following Equation (6), a, which is discrete behavior data, becomes 1-st from a switching time from st to 1-st onward.

$$
\begin{aligned}
A_t^d = \{ & (a_t = s_t, \quad a_{t+1} = s_t, \cdots, a_{t+H-2} = s_t, \quad a_{t+H-1} = s_t), \\
& (a_t = s_t, \quad a_{t+1} = s_t, \cdots, a_{t+H-2} = s_t, \quad a_{t+H-1} = 1 - s_t), \\
& (a_t = s_t, \quad a_{t+1} = s_t, \cdots, a_{t+H-2} = 1 - s_t, a_{t+H-1} = 1 - s_t), \\
& \vdots \\
& (a_t = s_t, \quad a_{t+1} = 1 - s_t, \cdots, a_{t+H-2} = 1 - s_t, a_{t+H-1} = 1 - s_t), \\
& (a_t = 1 - s_t, a_{t+1} = 1 - s_t, \cdots, a_{t+H-2} = 1 - s_t, a_{t+H-1} = 1 - s_t) \}
\end{aligned} \tag{6}
$$

As illustrated in Equation (6), after an obtainable discrete behavior data series has been fixed, the continuous behavior data is optimized using a conventional PETS algorithm. Specifically, the continuous behavior data is optimized so as to maximize the reward of reinforcement learning.

Blocker

As described above, the hybrid PETS algorithm is introduced in the present exemplary embodiment. However, in cases in which a hybrid PETS algorithm is applied directly, there is a possibility that the robot 12 selects dangerous behavior at a stage when sufficient training has not yet been performed. The present exemplary embodiment accordingly introduces a blocker. Information regarding a blocker is described in the following reference document.

Gal Dalal, Krishnamurthy Dvijotham, Matej Vecerik, Todd Hester, Cosmin Paduraru, Yuval Tassa, "Safe Exploration in Continuous Action Spaces", 2018.

In the present exemplary embodiment, dangerous behavior of the robot 12 is suppressed using the blocker. The blocker changes the behavior of the robot 12 when a dangerous behavior of the robot 12 has been detected. In the present exemplary embodiment, in the model-based reinforcement learning described later, a penalty is added to the reward when the robot 12 has performed a dangerous behavior.

In the present exemplary embodiment, the control target portion 16 defines cases in which the control target portion 16 contacts an obstacle under circumstances of being in the second mode as dangerous behavior.

Specifically, firstly, the blocker of the present exemplary embodiment predicts a length of the spring 16C of the control target portion 16 based on the position data $p^{arm}$ of the arm 16A of the robot 12. Note that when doing so, the length of the spring 16C is predicted under that assumption that the control target portion 16 is in the first mode.

In cases in which a difference between the predicted value of the length of the spring 16C and the natural length of the spring 16C is not more than a prescribed threshold (hereinafter simply referred to as 'threshold'), the possibility that the peg T or the control target portion 16 is contacting an obstacle is low. This means that in cases in which the difference between the predicted value of the length of the spring 16C and the natural length of the spring 16C is not more than the threshold, the control target portion 16 is left in the second mode. Note that the threshold may, for example, be pre-set by a user.

However, in cases in which the predicted value of the length of the spring 16C and the natural length of the spring 16C is greater than the threshold, the possibility that the peg T or the control target portion 16 is contacting an obstacle is high. The control target portion 16 is accordingly switched to the first mode in cases in which the difference between the predicted value of the length of the spring 16C and the natural length of the spring 16C is greater than the threshold.

When predicting the length of the spring 16C in the present exemplary embodiment, plural neural network models configuring a Probabilistic Ensemble Model as described above are employed. Each of the plural neural network models is

input with the position data $p^{arm}$ of the arm 16A of the control target portion 16 and outputs a predicted value of the length of the spring 16C.

In the present exemplary embodiment, combinations of the position data $p^{arm}$ of the arm 16A of the control target portion 16 and correct answer data l of the length of the spring 16C obtained when the control target portion 16 is in the first mode are acquired as training data. Then, in the present exemplary embodiment, the plural neural network models configuring the Probabilistic Ensemble Model are trained based on the training data.

The blocker computes a mean $l^{pred}$ of prediction values output from the plural neural network models configuring the Probabilistic Ensemble Model, an ensemble deviation $\sigma_{ale}$, and a prediction model deviation $\sigma_{epi}$. Note that the ensemble deviation $\sigma_{ale}$ and the prediction model deviation $\sigma_{epi}$ are deviations in the output of the plural neural network models. The ensemble deviation $\sigma_{ale}$ is a value indicating uncertainty due to noise. The prediction model deviation $\sigma_{epi}$ is a value indicating uncertainty due to insufficient data. The blocker determines whether or not the current arm 16A position is dangerous according to following Equation (7).

$$\mathrm{IsDanger}(p^{\mathrm{arm}}) = \begin{cases} 0 & \text{if } (l^{\mathrm{pred}} \simeq l^{\mathrm{natural}} \text{ and } \sigma_{\mathrm{ale}}, \sigma_{\mathrm{epi}} < \epsilon) \quad // \text{ Safe} \\ 1 & \text{else} \quad // \text{ Danger} \end{cases} \tag{7}$$

In above Equation (7), determination is that the position of the arm 16A of the robot 12 is safe in cases in which the predicted value mean $l^{pred}$ of the length of the spring 16C is close to the natural length $l^{natural}$, the difference between the predicted value mean $l^{pred}$ of the length of the spring 16C and the natural length $l^{natural}$ is not more than the threshold, and also the ensemble deviation $\sigma_{ale}$ and the prediction model deviation $\sigma_{epi}$ are not more than the threshold $\varepsilon$. However, determination is that the position of the arm 16A of the robot 12 is dangerous in cases in which the difference between predicted value mean $l^{pred}$ of the length of the spring 16C and the natural length $l^{natural}$ is greater than the threshold, the ensemble deviation $\sigma_{ale}$ is greater than the threshold, or the prediction model deviation $\sigma_{epi}$ is greater than the threshold $\varepsilon$. The discrete behavior data $a^{disc}$ computed in reinforcement learning is changed based on the results of such determination. Specifically, the discrete behavior data $a^{disc}$ is changed according to following Equation (8).

$$a^{\mathrm{disc}}_{\mathrm{modified}} \leftarrow \begin{cases} a^{\mathrm{disc}} & \text{if (IsDanger is 0)} \quad // \text{ Safe} \\ 0 & \text{else} \quad // \text{ Danger} \end{cases} \tag{8}$$

In an exploration initial stage by the robot 12 moving the arm 16A, the amount of training data $\{p^{arm}, 1\}$, configured by combinations of the current position data of the arm 16A and the length of the spring 16C, is small, and so the ensemble deviation $\sigma_{ale}$ becomes large, and almost all positions are determined to be dangerous. Thus in the exploration initial stage, the control target portion 16 of the robot 12 is set to the first mode at most positions.

However, as exploration progresses, the volume of training data $\{p^{arm}, 1\}$, which is the combinations of the current position data of the arm 16A and the length of the spring 16C, increases, and so the ensemble deviation $\sigma_{ale}$ becomes small, and so positions where the difference between the predicted value mean $l^{pred}$ of the length of the spring 16C and the natural length $l^{natural}$ is not more than the threshold are determined to be safe. This means that occasions when the control target portion 16 of the robot 12 is set to the second mode become more frequent as exploration progresses.

Note that modifications of the behavior by the blocker, and also modifications of the reward by penalties, are executed in the hybrid PETS algorithm of the present exemplary embodiment. Specifically, as described above, model-based reinforcement learning is executed by adding a penalty (for example, reducing the reward in model-based reinforcement learning) when the robot 12 takes up a dangerous behavior.

Control System 10

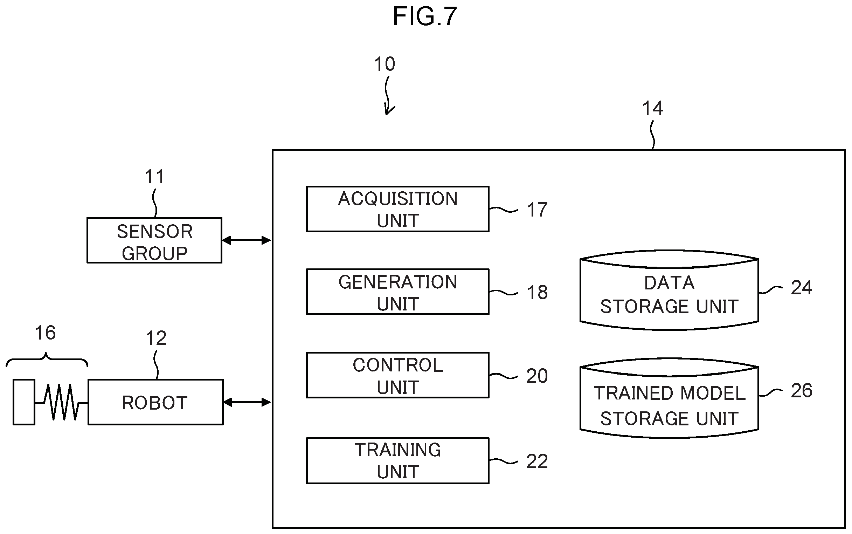

Fig. 7 is a block diagram illustrating a schematic configuration of the control system 10 of the present exemplary embodiment. As illustrated in Fig. 7, the control system 10 includes a sensor group 11, the robot 12, the control apparatus 14, and the control target portion 16 installed to the robot 12.

The sensor group 11 successively detects states of the robot 12. For example, the sensor group 11 successively detects position data $p^{arm}$ of the arm 16A.

The robot 12 acts according to control instructions output from the control apparatus 14, described later. The

control target portion 16 is a portion including the arm 16A and the gripper 16B provided to the robot 12.

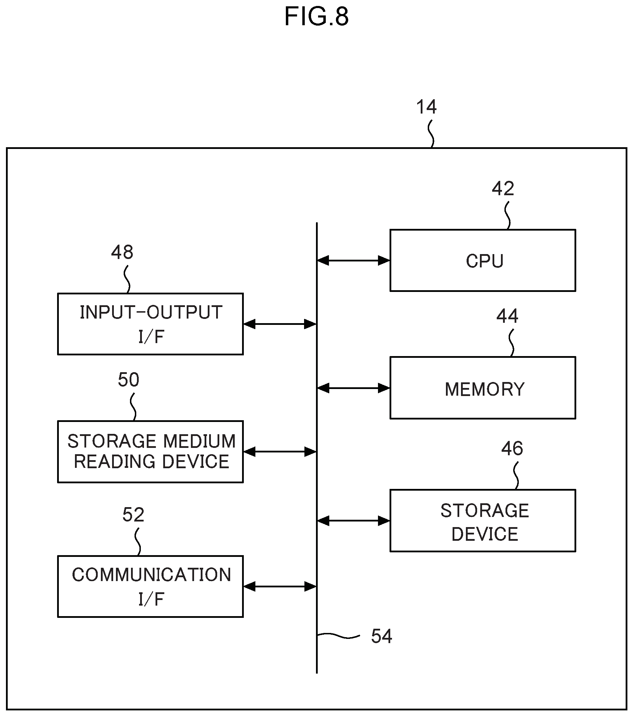

Fig. 8 is a block diagram illustrating a hardware configuration of the control apparatus 14 according to the present exemplary embodiment. As illustrated in Fig. 8, the control apparatus 14 includes a central processing unit (CPU) 42, memory 44, a storage device 46, an input-output interface (I/F) 48, a storage medium reading device 50, and a communication I/F 52. These configurations are connected together through a bus 54 so as to be capable of communicating with each other.

A control program for executing each processing described later is stored in the storage device 46. The CPU 42 is a central processing unit that controls each configuration by executing various programs. Namely, the CPU 42 reads a program from the storage device 46, and executes the program using the memory 44 as a work area. The CPU 42 controls each configuration and performs various computation processing according to the program stored on the storage device 46.

The memory 44 is configured by random access memory (RAM), and serves as a work area for temporarily storing programs and data. The storage device 46 is configured by a read only memory (ROM), and a hard disk drive (HDD), solid state drive (SSD), or the like, and stores various programs including an operating system and various data.

The input-output I/F 48 is an interface for input of data from outside, and for performing external output of data. Moreover, an input device for performing various inputs, such as for example a keyboard or mouse, and an output device for performing output of various information, such as for example a display or printer, may be connected thereto. If a touch panel display is adopted for the output device then this may also function as the input device.

The storage medium reading device 50 reads data stored on various storage media, such as a compact disk (CD)-ROM, a digital versatile disc (DVD)-ROM, a Blu-Ray disk, a universal serial bus (USB) memory, or the like, and writing of data to such storage media.

The communication I/F 52 is an interface for communicating with other devices and, for example, may employ a standard such as Ethernet (registered trademark), FDDI, Wi-Fi (registered trademark), or the like.

Next, description follows regarding a functional configuration of the control apparatus 14. As illustrated in Fig. 7, the control apparatus 14 includes, from a functional perspective, an acquisition unit 17, a generation unit 18, a control unit 20, and a training unit 22. A data storage unit 24 and a trained model storage unit 26 are also provided to a prescribed storage area of the control apparatus 14. Each functional configuration is implemented by the CPU 42 reading respective programs stored on the storage device 46 and expanding and executing the programs in the memory 44.

The data storage unit 24 is stored with series data etc. of various data obtained by the sensor group 11 and past control instructions.

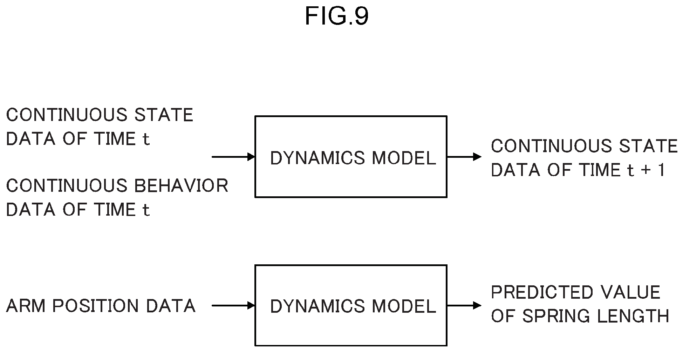

The plural neural network models configuring the Probabilistic Ensemble Model are stored in a trained model storage unit 26. Note that in the present exemplary embodiment, the plural neural network models configuring the Probabilistic Ensemble Model are simply called a dynamics model. The dynamics model of the present exemplary embodiment is a model representing the state and the peripheral environment of the robot 12. Fig. 9 is a diagram to explain the dynamics model.

As illustrated in Fig. 9, the dynamics model is a trained model taking input of the continuous state data $s^{conti}_t$ expressing continuous value states of robot 12 at time t, and input of the continuous behavior data $a^{conti}_t$ expressing continuous value behaviors of the robot 12 at time t, and outputting continuous state data $s^{conti}_t$ at time t + 1. Moreover, as illustrated in Fig. 9, the dynamics model is a model taking input of the position data $p^{arm}$ of the arm 16A of the control target portion 16 and outputting the predicted value $l^{pred}$ of the length of the spring 16C of the control target portion 16.

The acquisition unit 17 acquires the position data $p^{arm}$ of the arm 16A of the control target portion 16 provided to the robot 12. For example, the acquisition unit 17 acquires the position data $p^{arm}$ of the arm 16A obtained by the sensor group 11.

By input of the position data $p^{arm}$ acquired by the acquisition unit 17 to the dynamics model stored in the trained model storage unit 26, the generation unit 18 generates predicted deformation degree data expressing prediction values of a degree of deformation of the control target portion 16. Specifically, by input of the position data $p^{arm}$ of the arm 16A to the dynamics model stored in the trained model storage unit 26, the generation unit 18 generates prediction values $l^{pred}$ of the length of the spring 16C provided to the control target portion 16. The prediction values $l^{pred}$ of the length of the spring 16C are an example of predicted deformation degree data.

The control unit 20 controls actions of the robot 12 according to the continuous behavior data series $a^{conti}_{t:t+H-1}$ from time t + 1 to time t + H, and the discrete behavior data series $a^{disc}_{t:t+H-1}$ from time $_{t+1}$ to time $_{t+H}$, which were generated by a control step the previous time by the training unit 22, described later.

When controlling the robot 12 according to the series data as described above, the control unit 20 also combines mode switching control. The function of the blocker described above is realized by the mode switching control by the control unit 20.

Specifically, the control unit 20 controls such that the control target portion 16 is in the first mode in cases in which the difference between the prediction values $l^{pred}$ of the length of the spring 16C generated by the generation unit 18 and the natural length $l^{natural}$ of the spring 16C is the threshold or greater. The first mode is a mode in which the arm 16A and the

gripper 16B are connected by the spring 16C. On the other hand, the control unit 20 controls such that the control target portion 16 is in the second mode in cases in which the difference between the prediction values $l^{pred}$ of the length of the spring 16C generated by the generation unit 18 and the natural length $l^{natural}$ of the spring 16C is less than the threshold. The second mode is a mode in which the arm 16A and the gripper 16B are connected so as to form a single body.

Moreover, the control unit 20 acquires, as training data, combinations of the position data $p^{arm}$ of the arm 16A of the control target portion 16 while the control target portion 16 is being moved and correct answer deformation degree data expressing the actual deformation degree of the spring 16C of the control target portion 16. The correct answer deformation degree data is, for example, as detected by the sensor group 11.

The training unit 22 re-trains the dynamics model stored in the trained model storage unit 26 by executing machine learning, which is known training, based on the training data acquired by the control unit 20.

Moreover, the training unit 22 generates a series of continuous behavior data to be employed in the control unit 20 for the next time control step based on the model-based reinforcement learning. In such cases, in the model-based reinforcement learning, the training unit 22 optimizes the continuous behavior data expressing continuous value behavior of the robot 12 and the discrete behavior data while fixing the discrete behavior data expressing discrete value behavior of the robot 12 representing switching between the first mode and the second mode. The control unit 20 then, at the next time control step, controls actions of the robot 12 according to the optimized continuous behavior data and discrete behavior data.

Specifically, the training unit 22 acquires the continuous state data series $s^{conti}_{time\,t+H-1}$ from time t + 1 to time t + H by repeatedly being input with the previous time continuous state data $s^{conti}$ and the previous time continuous behavior data $a^{conti}$ for the dynamics model stored in the trained model storage unit 26. Next, the training unit 22 fixes the discrete behavior data series $a^{disc}_{t:t+H-1}$ of time t + 1 to time t + H that is discrete behavior data expressing the discrete value behavior of the robot 12 expressing the switching between the first mode and the second mode.

Based on the continuous state data series $s^{conti}_{t:t+H-1}$ acquired from time t + 1 to time t + H and on the discrete behavior data series $a^{disc}_{t:t+H-1}$ fixed from time t + 1 to time t + H, the training unit 22 generates the continuous behavior data series $a^{conti}_{t:t+H-1}$ from time t + 1 to time t + H and the discrete behavior data series $_{t:t+H-1}$ from time t + 1 to time t + H so as to maximum an evaluation function expressing a sum of rewards in the model-based reinforcement learning. Note that the continuous behavior data is, for example, control instructions to the robot 12. For example, the continuous behavior data is velocity instructions to the arm 16A. Moreover, the discrete behavior data is control instructions expressing mode switching as represented by 0 or 1.

In the next time control step, the control unit 20 controls actions of the robot 12 according to the continuous behavior data series $a^{conti}_{t:t+H-1}$ from time t + 1 to time t + H and the discrete behavior data series $_{t:t+H-1}$ from time t + 1 to time t + H generated by the training unit 22.

Next, description follows regarding operation of the control apparatus 14 according to the present exemplary embodiment.

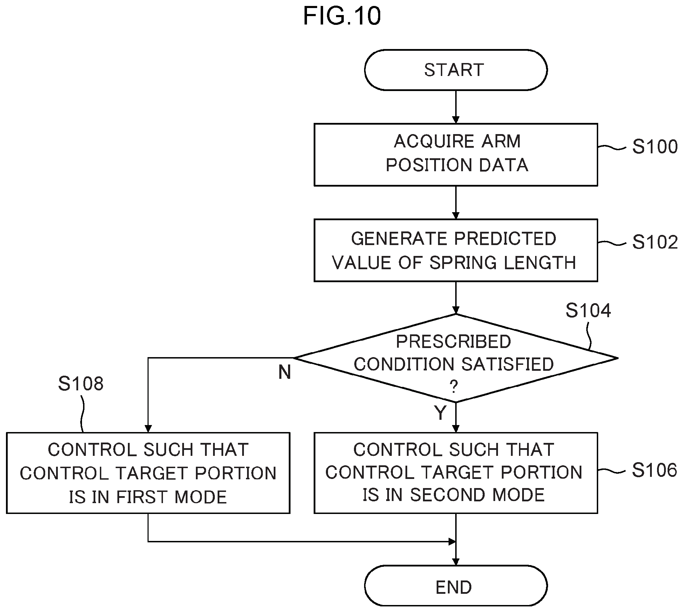

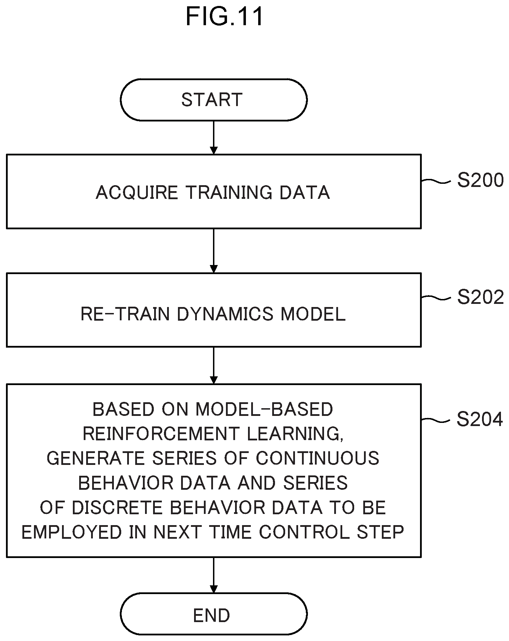

The peg T is mounted to the gripper 16B, and when the control apparatus 14 receives a prescribed instruction signal, the CPU 42 of the control apparatus 14 reads the control program from the storage device 46 and expands and executes the control program in the memory 44. The CPU 42 accordingly functions as each functional configuration of the control apparatus 14, and the control processing illustrated in Fig. 10 and Fig. 11 is repeatedly executed.

At step S100, the acquisition unit 17 acquires the position data $p^{arm}$ of the arm 16A acquired by the sensor group 11.

At step S102, the generation unit 18 acquires the predicted value $l^{pred}$ of the length of the spring 16C by input of the position data $p^{arm}$ of the arm 16A acquired at step S100 to the dynamics model stored in the trained model storage unit 26.

At step S104, the control unit 20 determines whether or not a prescribed condition related to mode switching has been satisfied based on the data generated at step S102. Specifically, processing proceeds to step S106 in cases in which the difference between the predicted value $l^{pred}$ of the length of the spring 16C acquired at step S102 and the natural length $l^{natural}$ of the spring 16C is less than the threshold. On the other hand, processing proceeds to step S108 in cases in which the difference between the predicted value $l^{pred}$ of the length of the spring 16C acquired at step S102 and the natural length $l^{natural}$ of the spring 16C is the threshold or greater.

At step S106, the control unit 20 controls the actions of the robot 12 according to the continuous behavior data series $a^{conti}_{t:t+H-1}$ from time t + 1 to time t + H and according to the discrete behavior data series $a^{disc}_{t:t+H-1}$ from time t + 1 to time t + H as generated by the training unit 22 in the previous time step. Note that at such times the control unit 20 controls such that the control target portion 16 is in the second mode. In cases in which the current mode of the control target portion 16 is the second mode, the control unit 20 leaves the control target portion 16 continue in this mode.

At step S108, the control unit 20 controls actions of the robot 12 according to the continuous behavior data series $a^{conti}_{t:t+H-1}$ from time t + 1 to time t + H and the discrete behavior data series $a^{disc}_{t:t+H-1}$ from time t + 1 to time t + H as generated by the training unit 22 in the previous time step. Note that that at such times the control unit 20 controls such that the control target portion 16 is in the first mode. In cases in which the current mode of the control target portion 16 is the first

mode, the control unit 20 leaves the control target portion 16 continue in this mode.

Next, the control apparatus 14 executes the control processing illustrated in Fig. 11.

At step S200, while the control target portion 16 is being moved, the training unit 22 acquires combinations of the position data $p^{arm}$ of the arm 16A of the control target portion 16 and the correct answer deformation degree data representing the actual deformation degree of the spring 16C of the control target portion 16, as training data.

At step S202, the training unit 22 re-trains the dynamics model stored in the trained model storage unit 26 by executing machine learning, which is known training, based on the training data acquired at step S200.

At step S204, based on the model-based reinforcement learning, the training unit 22 generates a continuous behavior data series and a discrete behavior data series to be employed for the next time control step in the control unit 20.

The peg-in-hole task is executed appropriately by the control processing illustrated in Fig. 10 and Fig. 11 being performed repeatedly, and by control signals being output repeatedly to the robot 12.

As described above, the control apparatus according to the present exemplary embodiment acquires the position data of the control target portion provided to the robot, and generates predicted values of the length of a spring, serving as an example of deformation degree of the control target portion, by inputting the acquired position data to the dynamics model. Then when controlling the robot, the control apparatus controls the control target portion so as to be in the first mode in cases in which the difference between the generated predicted value of the length of the spring and the natural length of the spring is the threshold or greater. The control apparatus controls the control target portion so as to be in the second mode in cases in which the difference between the generated predicted value of the length of the spring and the natural length of the spring is the threshold or greater. This thereby enables a task to be executed in cases in which information related to the environment of the robot is unable to be acquired in advance, while suppressing the robot from contacting an obstacle when in a rigid state.

Although an exemplary embodiment and examples have been described above, obviously various other embodiments may be implemented within a scope not departing from the spirit of the present disclosure.

For example, although an example has been described in the above exemplary embodiment in which the object task is a peg-in-hole task, there is no limitation thereto. The task may be any task executable by the robot 12.

Moreover, configuration of the state data and behavior data of the above exemplary embodiment may be changed as appropriate.

Moreover, although in the above exemplary embodiment an example has been described in which the length of a spring is predicted by the dynamics model, and switching between the first mode and the second mode is performed according to the length thereof, there is no limitation thereto. For example, the control apparatus 14 may be configured so as to switch between the first mode and the second mode according to whether or not the arm 16A has visited a position expressed by the position data $p^{arm}$ of the arm 16A of the control target portion 16 in the past. In such cases, for example, the control apparatus 14 controls the control target portion 16 so as to be in the first mode, in which the degree of softness of the control target portion 16 is a prescribed value or greater, in cases in which the control target portion 16 has visited the position expressed by the position data $p^{arm}$ of the arm 16A in the past or cases in which a degree of contact of the control target portion 16 with an obstacle at the position data $p^{arm}$ is a prescribed degree or greater. On the other hand, the control apparatus 14 controls the control target portion 16 so as to be in the second mode, in which a degree of rigidity of the control target portion 16 is a prescribed value or greater, in cases in which the control target portion 16 has visited the position expressed by the position data $p^{arm}$ of the arm 16A in the past and also in cases in which a degree of contact of the control target portion 16 at the position data $p^{arm}$ with the obstacle is less than a prescribed degree. Determination as to whether or not the degree of contact of the control target portion 16 with an obstacle is the prescribed degree or greater is determination from data output from the dynamics model as described above. Note that specific values for determining whether or not the degree of contact with an obstacle is the prescribed degree or greater may, for example, be pre-set by a user. Moreover, the prescribed value representing the degree of softness of the control target portion 16 is configured by a different value depending on a mechanism for implementing the control target portion 16.

Moreover, although the above exemplary embodiment is configured under the assumption that mode switching only occurs once, there is no limitation thereto. For example, the switching of the mode may occur plural times.

Moreover, each of the processing executed in the above exemplary embodiment by the CPU reading and executing software (a program) may be executed by various processors other than a CPU. Examples of such processors include programmable logic devices (PLD) having circuit configurations that are modifiable after manufacture, such as field programmable gate arrays (FPGA), and dedicated electrical circuits or the like that are processors containing circuit configurations specifically designed to execute particular processing, such as an application specific integrated circuit (ASIC). Moreover, each processing may be executed by a single of such various processors, or may be executed by a combination of two or more processors of the same or different type (for example, by plural FPGAs, or by a combination of a CPU and an FPGA or the like). Moreover, the hardware structure of such processors is, more specifically, electrical circuits combining circuit elements such as semiconductor elements.

Moreover, although in the above exemplary embodiment a mode has been described in which each program is pre-stored (pre-installed) on a storage device, there is no limitation thereto. The program may be provided in a format

stored on a storage medium such as a CD-ROM, DVD-ROM, Blu-ray disc, USB memory, or the like. Moreover, the program may be in a format downloadable from an external device over a network.

Supplements

The following supplements are given for modes of the present disclosure.

Supplement 1

A control apparatus including:

an acquisition unit configured to acquire position data of a control target portion provided to a robot; and
a control unit configured to

control the control target portion so as to be in a first mode, in which a degree of softness of the control target portion is a prescribed value or greater, in cases in which the control target portion has not visited a position expressed by the position data in the past, or in cases in which a degree of contact of the control target portion with an obstacle at the position is a prescribed degree or greater, and
control the control target portion so as to be in a second mode, in which a degree of rigidity of the control target portion is a prescribed value or greater, in cases in which the control target portion has visited the position expressed by the position data in the past and also in cases in which a degree of contact of the control target portion with an obstacle at the position is less than the prescribed degree.

The control apparatus of Supplement 1, further including:

a generation unit that is configured to generate the predicted deformation degree data by inputting the position data acquired by the acquisition unit as a degree of contact of the control target portion with an obstacle to a dynamics model input with position data of the control target portion and outputting predicted deformation degree data expressing predicted values of the deformation degree of the control target portion; and
the control unit, when controlling the robot, controls the control target portion so as to be in the first mode in cases in which the generated predicted deformation degree data is a prescribed threshold or greater, and controls the control target portion so as to be in the second mode in cases in which the generated predicted deformation degree data is less than the prescribed threshold.

Supplement 3

The control apparatus of Supplement 2, further including a training unit, wherein:

the control unit is configured to, while the control target portion is being moved, acquire combinations of position data of the control target portion and correct answer deformation degree data expressing an actual deformation degree of the control target portion, and to store the combinations in a storage unit; and
the training unit reads the combinations from the storage unit and trains the dynamics model based on the combinations.

Supplement 4

The control apparatus of Supplement 3, wherein:

the training unit is configured to, in model-based reinforcement learning, fix discrete behavior data expressing discrete value behavior of the robot representing switching between the first mode and the second mode while optimizing continuous behavior data expressing continuous value behavior of the robot and the discrete behavior data; and
the control unit controls actions of the robot according to the optimized continuous state data and the discrete behavior data.

Supplement 5

The control apparatus of Supplement 4, wherein:

the training unit
acquires a series of the continuous state data from time t + 1 to time t + H by repeatedly inputting the continuous state data at the previous time and the continuous behavior data at the previous time to the dynamics model input with continuous state data expressing a state of continuous values of the robot at time t and the continuous behavior data at time t and outputting the continuous state data at time t + 1,

fixes a series of the discrete behavior data from time t + 1 to time t + H, and
based on the acquired continuous state data series from time t + 1 to time t + H and on the fixed discrete behavior data from time t + 1 to time t + H, acquires a series of the continuous behavior data from time t + 1 to time t + H and a series of the discrete behavior data from time t + 1 to time t + H so as to maximize an evaluation function representing a sum of rewards in the model-based reinforcement learning; and

the control unit controls actions of the robot according to the continuous behavior data series from time t + 1 to time t + H and the discrete behavior data series from time t + 1 to time t + H.

Supplement 6

The control apparatus of any one of Supplement 1 to Supplement 5, wherein:

the control target portion is a portion including an arm and a griper provided to the robot;
the first mode is a mode in which the arm and the gripper are connected by a resilient body; and
the second mode is a mode in which the arm and the gripper are connected so as to form a single body.

Supplement 6

A control method for execution by a computer, the control method including processing of:

acquiring position data of a control target portion provided to a robot;
controlling the control target portion so as to be in a first mode, in which a degree of softness of the control target portion is a prescribed value or greater, in cases in which the control target portion has not visited a position expressed by the position data in the past, or in cases in which a degree of contact of the control target portion with an obstacle at the position is a prescribed degree or greater; and
controlling the control target portion so as to be in a second mode, in which a degree of rigidity of the control target portion is a prescribed value or greater, in cases in which the control target portion has visited the position expressed by the position data in the past and also in cases in which a degree of contact of the control target portion with an obstacle at the position is less than the prescribed degree.

Supplement 7

A control program to cause a computer to execute processing including:

acquiring position data of a control target portion provided to a robot;
controlling the control target portion so as to be in a first mode, in which a degree of softness of the control target portion is a prescribed value or greater, in cases in which the control target portion has not visited a position expressed by the position data in the past, or in cases in which a degree of contact of the control target portion with an obstacle at the position is a prescribed degree or greater; and
controlling the control target portion so as to be in a second mode, in which a degree of rigidity of the control target portion is a prescribed value or greater, in cases in which the control target portion has visited the position expressed by the position data in the past and also in cases in which a degree of contact of the control target portion with an obstacle at the position is less than the prescribed degree.

The entire content of the disclosure of Japanese Patent Application No. 2023-172330 filed on October 3, 2023 is incorporated by reference in the present specification. All publications, patent applications and technical standards mentioned in the present specification are incorporated by reference in the present specification to the same degree as if each individual publication, patent application, or technical standard was specifically and individually indicated to be incorporated by reference.

## Claims

**1.** A control apparatus comprising:

an acquisition unit configured to acquire position data of a control target portion provided to a robot; and
a control unit configured to

control the control target portion so as to be in a first mode, in which a degree of softness of the control target portion is a prescribed value or greater, in cases in which the control target portion has not visited a position expressed by the position data in the past, or in cases in which a degree of contact of the control target portion with an obstacle at the position is a prescribed degree or greater, and
control the control target portion so as to be in a second mode, in which a degree of rigidity of the control target portion is a prescribed value or greater, in cases in which the control target portion has visited the position expressed by the position data in the past and also in cases in which a degree of contact of the control target portion with an obstacle at the position is less than the prescribed degree.

**2.** The control apparatus of claim 1, further comprising:

a generation unit that is configured to generate the predicted deformation degree data by inputting the position data acquired by the acquisition unit as a degree of contact of the control target portion with an obstacle to a dynamics model input with position data of the control target portion and outputting predicted deformation degree data expressing predicted values of the deformation degree of the control target portion; and
the control unit, when controlling the robot, controls the control target portion so as to be in the first mode in cases in which the generated predicted deformation degree data is a prescribed threshold or greater, and controls the control target portion so as to be in the second mode in cases in which the generated predicted deformation degree data is less than the prescribed threshold.

**3.** The control apparatus of claim 2, further comprising a training unit, wherein:

the control unit is configured to, while the control target portion is being moved, acquire combinations of position data of the control target portion and correct answer deformation degree data expressing an actual deformation degree of the control target portion, and to store the combinations in a storage unit; and
the training unit reads the combinations from the storage unit and trains the dynamics model based on the combinations.

**4.** The control apparatus of claim 3, wherein:

the training unit is configured to, in model-based reinforcement learning, fix discrete behavior data expressing discrete value behavior of the robot representing switching between the first mode and the second mode while optimizing continuous behavior data expressing continuous value behavior of the robot and the discrete behavior data; and
the control unit controls actions of the robot according to the optimized continuous behavior data and the discrete behavior data.

**5.** The control apparatus of claim 4, wherein:

the training unit

acquires a series of the continuous state data from time t + 1 to time t + H by repeatedly inputting the continuous state data at the previous time and the continuous behavior data at the previous time to the dynamics model input with continuous state data expressing a state of continuous values of the robot at time t and the continuous behavior data at time t and outputting the continuous state data at time t + 1,
fixes a series of the discrete behavior data from time t + 1 to time t + H, and
based on the acquired continuous state data series from time t + 1 to time t + H and on the fixed discrete behavior data from time t + 1 to time t + H, acquires a series of the continuous behavior data from time t + 1 to time t + H and a series of the discrete behavior data from time t + 1 to time t + H so as to maximize an evaluation function representing a sum of rewards in the model-based reinforcement learning; and

the control unit controls actions of the robot according to the continuous behavior data series from time t + 1 to time t + H and the discrete behavior data series from time t + 1 to time t + H.

**6.** The control apparatus of claim 1 or claim 2, wherein:

the control target portion is a portion including an arm and a griper provided to the robot;
the first mode is a mode in which the arm and the gripper are connected by a resilient body; and
the second mode is a mode in which the arm and the gripper are connected so as to form a single body.

**7.** A control method for execution by a computer, the control method comprising processing of:

acquiring position data of a control target portion provided to a robot;
controlling the control target portion so as to be in a first mode, in which a degree of softness of the control target portion is a prescribed value or greater, in cases in which the control target portion has not visited a position expressed by the position data in the past, or in cases in which a degree of contact of the control target portion with an obstacle at the position is a prescribed degree or greater; and
controlling the control target portion so as to be in a second mode, in which a degree of rigidity of the control target portion is a prescribed value or greater, in cases in which the control target portion has visited the position expressed by the position data in the past and also in cases in which a degree of contact of the control target portion with an obstacle at the position is less than the prescribed degree.

**8.** A control program to cause a computer to execute processing comprising:

acquiring position data of a control target portion provided to a robot;
controlling the control target portion so as to be in a first mode, in which a degree of softness of the control target portion is a prescribed value or greater, in cases in which the control target portion has not visited a position expressed by the position data in the past, or in cases in which a degree of contact of the control target portion with an obstacle at the position is a prescribed degree or greater; and
controlling the control target portion so as to be in a second mode, in which a degree of rigidity of the control target portion is a prescribed value or greater, in cases in which the control target portion has visited the position expressed by the position data in the past and also in cases in which a degree of contact of the control target portion with an obstacle at the position is less than the prescribed degree.

FIG.1

10
12
14
CONTROL
APPARATUS
16
T
H

FIG.2

p^arm
16A
16C
16
16B
T

FIG.3
X
Y
Z
16A
16B
16C
16
l1
l2
T
FL

FIG.4
AR
16
16A
16B
T
H
FL

FIG.5
AR
16
16A
16C
16B
T
H
FL

FIG.6

TIME t + 1
TIME t + 2
TIME t + 3
...
TIME t + H
FIRST NEURAL NETWORK MODEL
St+1,1
St+2,1
St+3,1
St+H,1
SECOND NEURAL NETWORK MODEL
St+1,2
St+2,2
St+3,2
St+H,2
...
nTH NEURAL NETWORK MODEL

FIG.7
10
14
ACQUISITION UNIT
17
GENERATION UNIT
18
CONTROL UNIT
20
TRAINING UNIT
22
DATA STORAGE UNIT
24
TRAINED MODEL STORAGE UNIT
26
SENSOR GROUP
11
ROBOT
12
16

FIG.8

14
42
CPU
48
INPUT-OUTPUT
I/F
44
MEMORY
50
STORAGE MEDIUM
READING DEVICE
46
STORAGE
DEVICE
52
COMMUNICATION
I/F
54

FIG.9

CONTINUOUS STATE DATA OF TIME t
CONTINUOUS BEHAVIOR DATA OF TIME t
DYNAMICS MODEL
CONTINUOUS STATE DATA OF TIME t + 1
ARM POSITION DATA
DYNAMICS MODEL
PREDICTED VALUE OF SPRING LENGTH

FIG.10

START
ACQUIRE ARM POSITION DATA
S100
GENERATE PREDICTED VALUE OF SPRING LENGTH
S102
S104
PRESCRIBED CONDITION SATISFIED ?
N
Y
S108
CONTROL SUCH THAT CONTROL TARGET PORTION IS IN FIRST MODE
CONTROL SUCH THAT CONTROL TARGET PORTION IS IN SECOND MODE
S106
END

FIG.11

START
ACQUIRE TRAINING DATA
S200
RE-TRAIN DYNAMICS MODEL
S202
BASED ON MODEL-BASED REINFORCEMENT LEARNING, GENERATE SERIES OF CONTINUOUS BEHAVIOR DATA AND SERIES OF DISCRETE BEHAVIOR DATA TO BE EMPLOYED IN NEXT TIME CONTROL STEP
S204
END

## INTERNATIONAL SEARCH REPORT

International application No. **PCT/JP2024/035324**

**A. CLASSIFICATION OF SUBJECT MATTER**

***B25J 13/00***(2006.01)i
FI: B25J13/00 Z

According to International Patent Classification (IPC) or to both national classification and IPC

**B. FIELDS SEARCHED**

Minimum documentation searched (classification system followed by classification symbols)

B25J13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-154457 A (ASAHI KOSAN KK) 15 August 2013 (2013-08-15) fig. 1-13 | 1, 7-8 |
| A | | 2-6 |
| A | JP 2021-37592 A (TOYOTA MOTOR KYUSHU INC.) 11 March 2021 (2021-03-11) entire text, all drawings | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035324**

| Patent document cited in search report | Publication date (day/month/year) | Patent family member(s) | Publication date (day/month/year) |
|---|---|---|---|
| JP 2013-154457 A | 15 August 2013 | (Family: none) | |
| JP 2021-37592 A | 11 March 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023172330 A


### Non-patent literature cited in the description


- Learning robotic assembly tasks with lower dimensional systems by leveraging physical softness and environmental constraints. **HAMAYA, M.** ; **LEE, R.** ; **TANAKA, K.** ; **VON DRIGALSKI, F** ; **NAKASHIMA, C.** ; **SHIBATA, Y** ; **IJIRI, Y**. In 2020 IEEE International Conference on Robotics and Automation (ICRA). IEEE., May 2020, 7747-7753
- **CHUA, K.** ; **CALANDRA, R** ; **MCALLISTER, R.** ; **LEVINE, S**. Deep reinforcement learning in a handful of trials using probabilistic dynamics models. *Advances in neural information processing systems*, 2018, 31
- **GAL DALAL** ; **KRISHNAMURTHY DVIJOTHAM** ; **MATEJ VECERIK** ; **TODD HESTER** ; **COSMIN PADURARU** ; **YUVAL TASSA**. *Safe Exploration in Continuous Action Spaces*, 2018